(19) Europäisches Patentamt
European Patent Office
Office européen des brevets

(11) **EP 4 553 310 A1**

(12) **EUROPEAN PATENT APPLICATION**

(43) Date of publication:
**14.05.2025 Bulletin 2025/20**

(21) Application number: **24211591.3**

(22) Date of filing: **07.11.2024**

(51) International Patent Classification (IPC):
**F02C 9/28** (2006.01)

(52) Cooperative Patent Classification (CPC):
**F02C 9/28;** F05D 2270/301; F05D 2270/304;
F05D 2270/309; F05D 2270/706

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023 US 202318504812**

(71) Applicant: **PRATT & WHITNEY CANADA CORP.**
**Longueuil, Québec J4G 1A1 (CA)**

(72) Inventor: **DURANLEAU-HENDRICKX, Louis**
**(01BE5) Longueuil, J4G 1A1 (CA)**

(74) Representative: **Dehns**
**10 Old Bailey**
**London EC4M 7NG (GB)**

(54) **BLENDED N-DOT AND RATIO UNIT REFERENCE ACCELERATION CONTROL ARCHITECTURE FOR GAS TURBINE ENGINE**

(57) A gas turbine engine acceleration control system (100) includes a fuel system (102) to output an amount of fuel and a controller (110) in signal communication with the fuel system (102). The controller (110) determines a real-time ratio between a real-time fuel flow and a real-time pressure of a gas turbine engine (20), to determine a real-time acceleration value of the gas turbine engine (20) based on a real-time rotational speed of the gas turbine engine (20), and to generate a first fuel command signal that reduces a first error between the real-time ratio and a ratio reference value, and a second fuel command signal that reduces a second error between a real-time acceleration value and an acceleration reference value. The controller (110) generates a blended fuel delivery command signal (123) based on the first and second fuel command signals, and controls the fuel system (102) to change the fuel flow using the blended fuel delivery command signal (123).

FIG. 2

**Description**

BACKGROUND

The subject matter disclosed herein generally relates to aircraft engines, and more particularly, to acceleration control of an aircraft gas turbine engine.

Control of acceleration, or in more technical terms, the control of the rate of change of rotational speed typically referred to as "N-dot" or simply "N", in a gas turbine engine is paramount, especially during startup and when necessitating an increase in engine thrust/power. During startup, controlling acceleration ensures a smooth and stable spool-up of the engine to its idle state, mitigating thermal stresses and avoiding engine stalls or surges, which could adversely impact engine components and lifespan.

On the other hand, during flight, particularly during phases like takeoff or climbing, judicious control over the engine's acceleration ensures that the necessary additional thrust is achieved efficiently and safely, without surpassing the structural and operational limits of the engine, thus safeguarding both optimal performance and safety. This meticulous management of acceleration aids in averting critical failures, ensures responsiveness to pilot input, and maintains the structural integrity of the engine, thereby underpinning secure and efficient flight operations.

SUMMARY

According to a first aspect of the invention, a gas turbine engine acceleration control system comprises a fuel system configured to output an amount of fuel, and a controller in signal communication with the fuel system. The controller is configured to determine a real-time Wf/P3 ratio between a real-time fuel flow (Wf) of the fuel output from the fuel system and a real-time pressure (P3) of a gas turbine engine; determine a real-time acceleration (N-dot) value of the gas turbine engine based on a real-time rotational speed (N) of the gas turbine engine; and generate a first fuel command signal that reduces a first error between the real-time Wf/P3 ratio and a Wf/P3 ratio reference value, and a second fuel command signal that reduces a second error between a real-time N-dot value and a N-dot reference value. The controller generates a blended fuel delivery command signal based on the first and second fuel command signals, and controls the fuel system to change the fuel flow using the blended fuel delivery command signal.

Optionally, a fuel delivery logic system is configured to average the first and second fuel command signals to generate the blended fuel delivery command signal.

Optionally, the fuel delivery logic system applies a first weighted value to the first fuel command signal and applies a second weighted value to the second fuel command signal.

Optionally, the fuel delivery logic system modifies the blended fuel delivery signal to limit the fuel delivery rate and the amount of the fuel output to the gas turbine engine.

Optionally, a gas turbine engine is configured to rotate at a rotational speed that can be varied in response to receiving the fuel output from the fuel system.

Optionally, the fuel flow output from the fuel supply system according to the blended fuel delivery command signal controls the acceleration of the gas turbine engine.

Optionally, a fuel flow sensor is configured to measure the real-time fuel flow (Wf) of the fuel delivered to the gas turbine engine and to output a fuel flow signal indicating the real-time fuel flow (Wf); a pressure sensor is configured to measure the real-time pressure (P3) of the gas turbine engine and to output a pressure signal indicating the real time pressure (P3); and a spool speed sensor is configured to measure the real-time rotational speed (N) of the gas turbine engine and to output a speed signal indicating the real-time rotational speed (N).

Optionally, a ratio unit is configured to receive the fuel flow signal and the pressure signal, and to output a Wf/P3 ratio signal indicating the real-time Wf/P3 ratio; and a derivative unit is configured to receive the speed signal and to output an acceleration signal indicating the real-time acceleration (N-dot) value.

Optionally, a first feedback controller is configured to output the first fuel command signal based on the Wf/P3 ratio signal and a Wf/P3 reference value; and a second feedback controller is configured to output the second fuel command signal based on the acceleration signal and an acceleration reference value.

Optionally, the Wf/P3 reference value and the acceleration reference value are based on at least one of ambient gas turbine compressor entry temperature (T1), ambient outside air temperature (OAT), ambient altitude, ambient airspeed, and the real-time rotational speed (N).

According to a second aspect of the invention, a method of controlling acceleration of a gas turbine engine comprises: outputting an amount of fuel from a fuel system; determining, by a controller, a real-time Wf/P3 ratio between a real-time fuel flow (Wf) of the fuel output from the fuel system and a real-time pressure (P3) of a gas turbine engine; determining, by the controller, a real-time acceleration (N-dot) value of the gas turbine engine based on a real-time rotational speed (N) of the gas turbine engine; and generating, by the controller, a first fuel command signal that reduces a first error between the real-time Wf/P3 ratio and a Wf/P3 ratio reference value, and a second fuel command signal that reduces a second error between a real-time N-dot value and a N-dot reference value. The method further comprises generating, by the controller, a blended fuel delivery command signal based on the first and second fuel command signals; and controlling the fuel system to change the fuel flow using the blended fuel delivery command signal.

Optionally, the method further comprises averaging, by a fuel delivery logic system, the first and second fuel command signals to generate the blended fuel delivery command signal.

Optionally, the method further comprises applying, by the fuel delivery logic system, a first weighted value to the first fuel command signal and applying a second weighted value to the second fuel command signal.

Optionally, the method further comprises modifying, by the fuel delivery logic system, the blended fuel delivery signal to limit the fuel delivery rate and the amount of the fuel output to the gas turbine engine.

Optionally, the method further comprises rotating a gas turbine engine at a rotational speed that can be varied in response to receiving the fuel output from the fuel system.

Optionally, the method further comprises controlling the fuel flow output from the fuel supply system according to the blended fuel delivery command signal so as to control the acceleration of the gas turbine engine.

Optionally, the method further comprises measuring, by a fuel flow sensor, the real-time fuel flow (Wf) of the fuel delivered to the gas turbine engine and outputting a fuel flow signal from the fuel flow sensor indicating the real-time fuel flow (Wf); measuring, by a pressure sensor, the real-time pressure (P3) of the gas turbine engine, and outputting a pressure signal from the pressure signal indicating the real time pressure (P3); and measuring, by a spool speed sensor, the real-time rotational speed (N) of the gas turbine engine, and outputting a speed signal from the spool speed sensor indicating the real-time rotational speed (N).

Optionally, the method further comprises delivering the fuel flow signal and the pressure signal to a ratio unit; outputting a Wf/P3 ratio signal indicating the real-time Wf/P3 ratio from the ratio unit; delivering the speed signal to a derivative unit; and outputting an acceleration signal indicating the real-time acceleration (N-dot) value from the derivative unit.

Optionally, the method further comprises outputting, from a first feedback controller, the first fuel command signal based on the Wf/P3 ratio signal and a Wf/P3 reference value; and outputting, from a second feedback controller, the second fuel command signal based on the acceleration signal and an acceleration reference value.

Optionally, the method further comprises determining the Wf/P3 reference value and the acceleration reference value based on at least one of ambient gas turbine compressor entry temperature (T1), ambient outside air temperature (OAT), ambient altitude, ambient airspeed, and the real-time rotational speed (N).

BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying non-limiting drawings in which:

FIG. 1 depicts an exemplary gas turbine engine; and
FIG. 2 is a block diagram of a gas turbine engine acceleration control system.

DETAILED DESCRIPTION

Gas turbines control systems include an acceleration control system, which controls engine start-up the engine and/or increases engine thrust/power. Some legacy gas turbines with hydromechanical controls systems use a ratio unit (RU) acceleration control system. The RU acceleration control system is a widespread gas turbine hydromechanical control metric defined as fuel flow (Wf) or fuel flow delivered over compressor discharge pressure (P3). Accordingly, the RU can calculate a target control ratio (Wf/P3), i.e., an amount of fuel delivery (e.g., pounds per hour (pph)) per compressor discharge pressure (e.g., pounds per square inch absolute (psia)). For legacy engines, this target control ratio can be obtained by monitoring or measuring the operation of various hydromechanical components such as bellows, speed governors flyweights and variable fuel metering windows.

More recently, aircrafts have implemented a more-electronic based acceleration control system, which utilizes an engine acceleration reference value, referred to as "N-dot" or simply "N". The 'N' refers to the rotational speed of the gas turbine engine. In one or more non-limiting embodiment, "N" refers to the rotational speed of the gas turbine high-pressure spool for which different nomenclature exists depending on the specific engine model (e.g., Nh, N2, N3, Ng, etc.). The N-dot or "N" refers to the derivative of "N", which is indicative of the engine acceleration.

Each acceleration control system (RU vs N-dot) has advantages and disadvantages. On one hand, the RU control system offers a more robust protection against engine safety limits (e.g., stalls, surges, overtemperature events or flameouts), but to the detriment of a varying acceleration time and to some 'hanging' acceleration in extreme cases (where the engine is not able to accelerate because the steady-state RU equals the acceleration reference control RU). Moreover, using a RU acceleration control system on an electronically control engine requires reliable instrumentation or estimation for compressor pressure (P3) and the fuel flow delivered (Wf), e.g., pounds per hour (pph). On the other hand, the N-dot acceleration control system offers a highly repeatable acceleration time and requires minimum engine instrumentation. The N-dot acceleration control system, however, can be at risk of exceeding an engine safety limit if engine conditions are outside of the expected range (e.g., operating outside of the engine operating envelopes, higher spool drag or customer bleed/load offtakes than expected).

Some modern gas turbines acceleration control systems include a N-dot acceleration control coupled with a maximum Wf/P3 limit. This compromise offers a bit more protection against safety limits but is still limited because of the margin on the Wf/P3 limit requires to account for Wf and P3 measuring uncertainties. Moreover, in extreme case, this system could also be stuck in 'hanging' accelerations.

Various non-limiting embodiments described herein provide a gas turbine engine acceleration control system that implements a blended control acceleration architecture. The blended control acceleration architecture utilizes an average of the Wf/P3 and the N-dot respective control signals to generate a fuel delivery control signal that controls engine fuel delivery and thus, accelerate the gas turbine. As described herein, an average of the Wf/P3 and the N-dot respective control signals is achieved using a "blended architecture" which utilizes two controllers (N-Dot and Wf/P3) working independently with respect to one another. Both controllers calculate, in parallel a fuel control signal (e.g., the N-Dot control signal and the Wf/P3 control signal) in order to get their respective control measured value (e.g., N-Dot or Wf/P3) on their respective targeted reference. These two independent parallel fuel control signals are then averaged and sent to the fuel system to control the fuel flow of the fuel delivered to the gas turbine engine.

In one or more non-limiting embodiments, the gas turbine engine acceleration control system applies weighted averages to the Wf/P3 and the N-dot respective control signals to generate the actual fuel delivery control signal. In this manner, protection against safety limits can be achieved to avoid being stuck in a 'hanging' acceleration while maintaining relatively repeatable acceleration times.

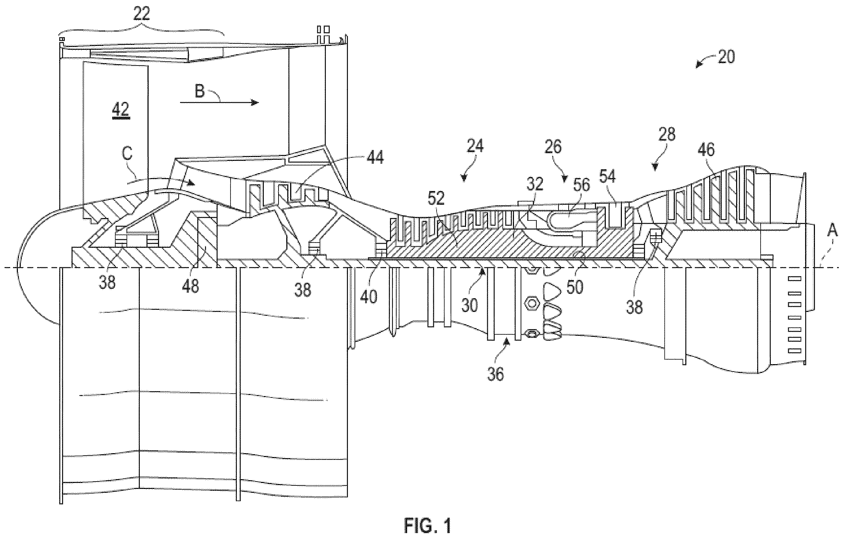

Turning now to FIG. 1, a gas turbine engine 20 is schematically depicted according to a non-limiting embodiment of the present disclosure. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, the concepts described herein are not limited to use with two-spool turbofans as the teachings may be applied to other types of turbine engines, including three-spool architectures.

The exemplary engine 20 generally includes a low-speed spool 30 and a high-speed spool 32 mounted for rotation about an engine central longitudinal axis A relative to an engine static structure 36 via several bearing systems 38. In some embodiments, various bearing systems 38 at various locations may alternatively or additionally be provided, and the location of bearing systems 38 may be varied as appropriate to the application.

The low-speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low-speed spool 30. The high-speed spool 32 includes an outer shaft 50 that interconnects a high pressure compressor 52 and high pressure turbine 54. A combustor 56 is arranged in exemplary gas turbine engine 20 between the high-pressure compressor 52 and the high-pressure turbine 54. An engine static structure 36 is arranged generally between the high-pressure turbine 54 and the low-pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high pressure turbine 54 and low pressure turbine 46. In some embodiments, stator vanes 45 in the low-pressure compressor 44 and stator vanes 55 in the high-pressure compressor 52 may be adjustable during operation of the gas turbine engine 20 to support various operating conditions. In other embodiments, the stator vanes 45, 55 may be held in a fixed position. The turbines 46, 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. It should be understood, however, that the above parameters are only exemplary of one embodiment of a geared architecture engine and that the present disclosure is applicable to other gas turbine engines including direct drive turbofans.

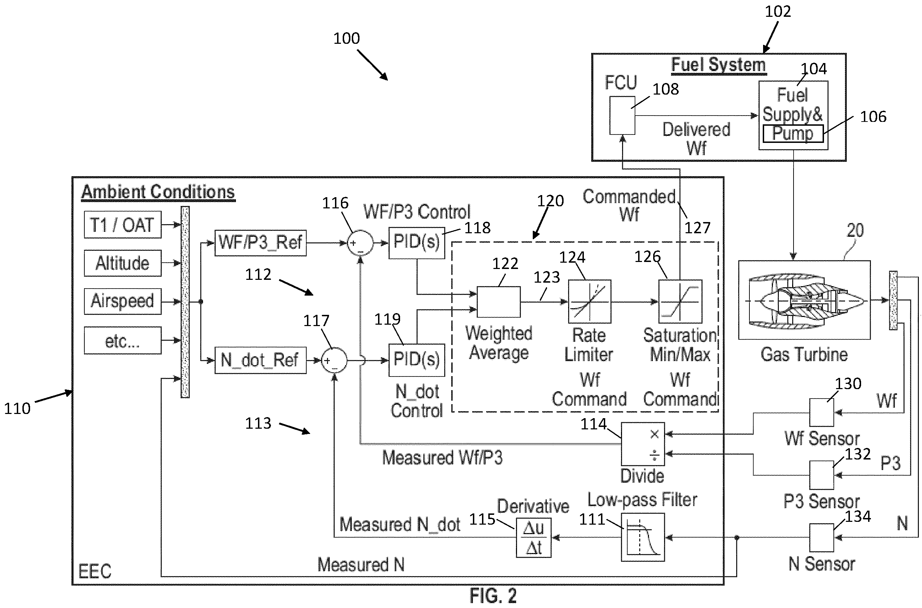

Turning now to FIG. 2, a gas turbine engine acceleration control system 100 is illustrated according to a non-limiting embodiment of the present disclosure. The gas turbine engine acceleration control system 100 includes a gas turbine engine 20, a fuel system 102, and a controller 110. As described herein, the gas turbine engine acceleration control system 100 implements a blended control acceleration architecture, which utilizes an average of a Wf/P3 ratio and an engine acceleration (N-dot) to generate a fuel delivery control signal that controls engine fuel delivery to control engine acceleration.

The gas turbine engine is configured to rotate at a variable rotational speed in response receiving fuel to generate thrust and power based on the rotational speed. The gas turbine engine acceleration control system 100 is configured to control acceleration for engine start-up and/or to increase engine thrust and power of the gas turbine engine. For example, the gas turbine engine acceleration control system 100 can perform two different acceleration control schemes with respect operation of the gas turbine engine 20. In a first acceleration control scheme, the gas turbine engine acceleration control system 100 can control acceleration during engine start to achieve targeted engine idle conditions. In a second acceleration control scheme, the gas turbine engine acceleration control system 100 can control acceleration to increase the gas turbine engine from idle condition to high thrust and/or high power conditions.

The fuel system 102 is configured to control output fuel flow and delivers an amount of the fuel to the gas turbine 20. In turn, the amount of fuel delivered to the gas turbine engine 20 controls the engine acceleration. For example, increasing the amount of fuel increase the acceleration of the gas turbine engine 20, and vice versa.

The fuel system 102 includes a fuel supply 104, a fuel pump 106 and a fuel control unit (FCU) 108. The fuel pump 106 delivers (e.g., pumps or forces) the fuel from the fuel supply 104 to the gas turbine engine 20. The FCU 108 outputs a fuel delivery control signal that controls the fuel pump 106 to deliver the amount of fuel to the gas turbine engine 20. In one or more non-limiting embodiments, the FCU 108 can be implemented as a controller that utilizes a blended fuel delivery signal 123 (referred to as a "Blend Command") generated by the controller 110 to generate a fuel pump control signal which controls the fuel pump 106 to meter the amount of fuel and vary or change the fuel flow of the fuel delivered from the fuel supply 104 to control the acceleration of the gas turbine engine 20.

The controller 110 can be implemented as an electronic engine controller (ECC), for example, which includes a hardware processor and memory. The memory can store various algorithms, models, set point values, thresholds, and software instructions, which can be executed by the hardware processor to facilitate acceleration control of the gas turbine engine 20.

The controller 110 is configured to determine a real-time Wf/P3 ratio and a real-time acceleration (N-dot) of the gas turbine engine 20. According to a non-limiting embodiment, the controller 110 can determine various ambient conditions and various operating parameters of the gas turbine 20. The ambient conditions include, but are not limited to, outside air temperature, aircraft altitude, aircraft airspeed, and a rotational speed (N) of the gas turbine engine 20. The operating parameters include, but are not limited to, fuel flow of the fuel delivered (Wf) to the gas turbine engine 20, a pressure (P3) associated with a compressor of the gas turbine engine 20, and a rotational speed (N) of the gas turbine engine 20. The ambient conditions can be used (e.g., by the controller 110) to determine a Wf/P3 ratio reference value and an N-dot reference value. In one or more non-limiting embodiments, the controller 110 actively determines the Wf/P3 ratio reference value and the N-dot reference value based on the current ambient conditions and/or the current engine operating conditions. During an acceleration of the gas turbine engine 20, for example, the Wf/P3 ratio reference value and the N-dot reference value are not necessarily constant but can be varied depending on the current ambient conditions (e.g., gas turbine compressor entry temperature (T1), outside air temperature (OAT), Altitude, Airspeed) and on one or more current engine operating conditions (e.g., engine rotational speed "N")

The controller 110 generates a first fuel command signal aimed at reducing the error between the real-time Wf/P3 ratio and the Wf/P3 ratio reference value, and a second fuel command signal aimed at reducing the error between the real-time N-dot value and the N-dot reference value. Using the first and second fuel command signals, the controller 110 generates a fuel delivery command signal that controls the amount of fuel output from the fuel system 102, which in turn controls the acceleration of the gas turbine engine 20.

With continued reference to FIG. 2, the controller 110 includes a ratio unit (RU) acceleration logic system 112, a spool rate acceleration logic system 113, and a fuel delivery logic system 120. The RU acceleration logic system 112 is configured to determine the real-time Wf/P3 ratio. The spool rate acceleration logic system 113 configured to determine the real-time N-dot of the gas turbine engine 20. The fuel delivery logic system 120 is configured to generate the fuel delivery command signal for controlling the amount of fuel delivered to the engine 20 based on an average between the first correction value and the second correction value.

The RU acceleration logic system 112 includes a ratio unit 114, a first error unit 116, and a first feedback controller 118. The ratio unit 114 is configured to determine the real-time ratio value (Wf/P3) based on a real-time fuel flow (Wf) delivered to the gas turbine engine 20 and a real-time compressor pressure (P3) of the gas turbine engine 20. For example, the ratio unit 114 can calculate the real-time ratio value (Wf/P3) by dividing the real-time Wf by the real-time P3. According to a non-limiting embodiment, the real-time fuel flow (Wf) delivered and the real-time compressor pressure (P3) are determined by sensors. For example, the gas turbine engine acceleration control system 100 can include a fuel flow sensor 130 and a pressure sensor 132. The fuel flow sensor 130 is configured to output a fuel signal indicating the real-time Wf, and the pressure sensor 132 is configured to output a pressure signal indicating the real-time compressor pressure (P3). In at least one non-limiting embodiment, the pressure sensor 132 is disposed at an outlet of the gas turbine engine compressor and is configured to measure the compressor pressure (P3) taken at the compressor outlet.

In one or more embodiments, the fuel flow (Wf) delivered and the compressor pressure (P3) may be determined according to methods other than direct measurement or sensor monitoring. For example, the fuel flow (Wf) delivered and the compressor pressure (P3) can be synthetized (e.g., by an in-loop engine model, a Kalman filter, etc.). The fuel flow (Wf) of fuel output from the fuel system 102 may also directly be taken as the Wf command to the FCU instead of being directly measured.

The first error unit 116 is configured to determine a first error difference (i.e., subtraction result) between the real-time Wf/P3 ratio value and the Wf/P3 ratio reference value. The first feedback controller 118 operates to determine a first correction value which reduces the first error difference (i.e., subtraction result) between the real-time Wf/P3 ratio value and the Wf/P3 ratio reference value to zero. The output from the first feedback controller 118 is a first fuel command signal (referred to as "Wf/P3 Control") indicating any change, if necessary, of the fuel flow (Wf) needed to reduce the first error difference (i.e., subtraction result) to zero, or substantially zero.

The spool rate acceleration logic system 113 includes a derivative unit 115, a second error unit 117, and a second feedback controller 119. The derivative unit 115 is configured to receive the real-time rotational speed (N) of the gas turbine engine 20 and to determine a derivative of the real-time rotational speed (N) which is indicative of the real-time N-dot value. According to a non-limiting embodiment, the gas turbine engine acceleration control system 100 can include a spool speed sensor 134 and a low-pass filter 111. The spool speed sensor 134 can monitor a rotational speed of a high-pressure spool included in the gas turbine engine, and to output a spool speed signal indicating a real-time rotational speed (N). The low-pass filter 111 receives the spool speed signal and removes noise such as high-frequency noise, for example, to output a filtered real-time rotational speed signal. Although the real-time rotational speed (N) of the engine is described as being measured, other means for determining the real-time rotational speed can be utilized. For example, the real-time rotational speed (N) can be synthetized (e.g., by an in-loop engine model, a Kalman filter, etc.).

The second error unit 117 is configured to determine the second error difference (i.e., subtraction result) between the real-time N-dot value and the N-dot reference value. The second feedback controller 119 operates to determine a second correction value which reduces the second error difference (i.e., subtraction result) between the real-time N-dot value and the N-dot reference value to zero. The output from the second feedback controller 119 is a second fuel command signal (referred to as "N-dot Control") indicating an adjustment or change, if necessary, of the fuel flow (Wf) needed to reduce the second error difference (i.e., subtraction result) to zero, or substantially zero. Although first and second feedback controllers 118 and 119 are illustrated in FIG. 2 as proportional-integral-derivative (PID) controllers, it should be appreciated that other types of feedback controllers can be implemented such as, for example, P controllers, PI controllers, PD controllers, lead-lag controllers, fuzzy logic controllers.

The fuel delivery logic system 120 includes an averaging unit 122, a rate limiting unit 124, and a saturation unit 126. The averaging unit 122 determines the average between the first fuel command signal indicative of the first correction value and the second fuel command signal indicative of the second correction value. Based on the averaged signals, the averaging unit 122 outputs a blended fuel delivery signal 123 (the Blend Command), which is ultimately used to generate the fuel flow delivery command signal 127 (referred to as "Wf Command"). In one or more non-limiting embodiments, the averaging unit 122 applies a first averaging weight (w1) to the first correction value (i.e., Wf/P3 Control) and a second averaging weight (w2) to the second correction value (i.e., N-dot Control). In one example, two separate computation engines, one with a N-Dot feedback controller 119 (e.g., an N-Dot PID) and one with a Wf/P3 feedback controller 118 (Wf/P3 PID) is provided. The N-Dot engine feedback controller 119 generates a first fuel command signal to match the measured N-Dot with a target reference N-Dot (e.g., 100 pph at a given condition). The Wf/P3 engine feedback controller 118 operates in a similar manner to generate a second fuel command signal to match the measured Wf/P3 to a target reference Wf/P3 (e.g., 110 pph at the same given condition). The blended architecture operates the two feedback controllers 118 and 119 (e.g., N-Dot PID and Wf/P3 PID) in parallel on the same engine and to average their respective fuel control signals. In the example, that averaging would include an average of 100 pph and 110 pph: 105 pph when the weights of the average are fifty-percent to fifty-percent (e.g., 50%/50%)

In a non-limiting embodiment, the weights are determined during engine development by testing and analyses to determine a target compromise between the two controls. For example, in more challenging operating conditions, the Wf/P3 weight can be set to be a higher value compared to the value set for the N-dot Control weight to benefit more for inherent protection it procures. In standard or nominal conditions (e.g., where the N-dot weight would be expected to be higher to benefit for the higher repeatability and since less protection is required for theses less 'risky' operating conditions), however, the weight for the N-dot Control may be set to a higher value compared to the weight set for the Wf/P3 control. In addition, one or more non-limiting embodiments provides that the weights (w1 and w2) of the weighted average could also be function of all or any of the current ambient conditions and/or current operating conditions based on which control mode is targeted to prioritize in a given situation (e.g., engine start-up, accelerations from idle, etc.).

The weighted averages are then combined to generate the blended fuel delivery signal 123. In at least one non-limiting embodiment, the averaging unit 122 can generate the blended fuel delivery signal 123 based on the following

equation:

$$\text{Blend Command} = w1*(\text{WF/P3 Control}) + w2*(\text{N-dot Control}),$$

where:

w1 is the first weighted average;

Wf/P3 Control is the first fuel command signal;

w2 is the second weighted average;

N-dot Control is the second fuel command signal; and

w1+w2 = 1

With continued reference to FIG. 2, the blended Wf command (Blend Command) is then passed through the rate limiting unit 124 and the saturation unit 126 so as to modify the blended fuel delivery signal 123 (e.g., the Blend Command) to limit the fuel delivery rate and the amount of the fuel output to the gas turbine engine 20. The rate limiting unit 124 determines a fuel delivery rate limit (e.g., a target amount of change in fuel delivered per second) at which to deliver the fuel to the gas turbine engine 20, and can prevent a fast or sudden increase/decrease of fuel flow. The saturation unit 126 determines a minimum fuel flow limit at which to deliver the fuel to the gas turbine engine 20 and a maximum fuel flow limit at which to deliver the fuel to the gas turbine engine 20. In some non-limiting embodiments, instead of implementing the rate limiter and saturation after the blending of the two modes Wf commands, each of the first fuel command signal (the "Wf/P3 Control") and the second fuel command signal (the "N-dot Control") can be individually rate-limited and/or saturated prior to blending with an optional final rate-limiter/saturation applied after blending as well). This could be done to limit the individual authority of each of the fuel command signals. Following processing by the fuel delivery logic system 120, the blended Wf command (Blend Command) is sent to the FCU 108 where it is used to control an actual metered fuel flow output from the fuel supply 104 for controlling the acceleration of the gas turbine engine 20.

As described herein, a gas turbine engine acceleration control system is provided, which implements a blended control acceleration architecture to control the acceleration of a gas turbine engine. The blended control acceleration architecture utilizes an average of the Wf/P3 and the N-dot respective control signals to generate a fuel delivery control signal that controls engine fuel delivery and thus, accelerate the gas turbine. In one or more non-limiting embodiments, the gas turbine engine acceleration control system applies weighted averages to the Wf/P3 and the N-dot respective control signals to generate the actual fuel delivery control signal. In this manner, protection against safety limits can be achieved to avoid being stuck in a 'hanging' acceleration while maintaining relatively repeatable acceleration times.

As used herein, the terms "about" and "substantially" are intended to include the degree of error associated with measurement of the particulate quantity based upon the equipment available at the time of filing the application. For example, the terms may include a range of ± 8%, or 5%, or 2% of a given value or other percentage change as will be appreciated by those of skill in the art for the particulate measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

While the present invention has been described in detail in connection with only a limited number of embodiments, it should be readily understood that the present invention is not limited to such disclosed embodiments. Rather, the present invention includes all embodiments falling within the scope of the appended claims. Additionally, while various embodiments of the present invention have been described, it is to be understood that aspects of the present invention may include only some of the described embodiments. Accordingly, the present invention is not to be seen as limited by the foregoing description but is only limited by the scope of the appended claims.

**Claims**

1. A gas turbine engine acceleration control system (100) comprising:

   a fuel system (102) configured to output an amount of fuel; and
   a controller (110) in signal communication with the fuel system (102), the controller (110) configured to:

   determine a real-time Wf/P3 ratio between a real-time fuel flow (Wf) of the fuel output from the fuel system (102) and a real-time pressure (P3) of a gas turbine engine (20);
   determine a real-time acceleration (N-dot) value of the gas turbine engine (20) based on a real-time rotational speed (N) of the gas turbine engine (20); and
   generate a first fuel command signal that reduces a first error between the real-time Wf/P3 ratio and a Wf/P3 ratio reference value, and a second fuel command signal that reduces a second error between a real-time N-dot value and a N-dot reference value,
   wherein the controller (110) generates a blended fuel delivery command signal (123) based on the first and second fuel command signals, and controls the fuel system (102) to change the fuel flow using the blended fuel delivery command signal (123).

2. The gas turbine engine acceleration control system (100) of claim 1, further comprising a fuel delivery logic system (120) configured to average the first and second fuel command signals to generate the blended fuel delivery command signal (123).

3. The gas turbine engine acceleration control system (100) of claim 1 or claim 2, wherein the fuel delivery logic system (120) applies a first weighted value to the first fuel command signal and applies a second weighted value to the second fuel command signal.

4. The gas turbine engine acceleration control system (100) of claim 2 or claim 3, wherein the fuel delivery logic system (120) modifies the blended fuel delivery signal (123) to limit the fuel delivery rate and the amount of the fuel output to the gas turbine engine (20).

5. The gas turbine engine acceleration control system (100) of any preceding claim, further comprising a gas turbine engine (20) configured to rotate at a rotational speed that can be varied in response to receiving the fuel output from the fuel system (102); and, optionally,
   wherein the fuel flow output from the fuel supply (104) system according to the blended fuel delivery command signal (123) controls the acceleration of the gas turbine engine (20).

6. The gas turbine engine acceleration control system (100) of claim 5, further comprising:

   a fuel flow sensor (130) configured to measure the real-time fuel flow (Wf) of the fuel delivered to the gas turbine engine (20) and to output a fuel flow signal indicating the real-time fuel flow (Wf);
   a pressure sensor (132) configured to measure the real-time pressure (P3) of the gas turbine engine (20) and to output a pressure signal indicating the real time pressure (P3); and
   a spool speed sensor (134) configured to measure the real-time rotational speed (N) of the gas turbine engine (20) and to output a speed signal indicating the real-time rotational speed (N); and, optionally,
   further comprising:

   a ratio unit (114) configured to receive the fuel flow signal and the pressure signal, and to output a Wf/P3 ratio signal indicating the real-time Wf/P3 ratio; and
   a derivative unit (115) configured to receive the speed signal and to output an acceleration signal indicating the real-time acceleration (N-dot) value.

7. The gas turbine engine acceleration control system (100) of any preceding claim, further comprising:

   a first feedback controller (118) configured to output the first fuel command signal based on the Wf/P3 ratio signal and a Wf/P3 reference value; and
   a second feedback controller (119) configured to output the second fuel command signal based on the acceleration signal and an acceleration reference value;
   and/or

wherein the Wf/P3 reference value and the acceleration reference value are based on at least one of ambient gas turbine compressor entry temperature (T1), ambient outside air temperature (OAT), ambient altitude, ambient airspeed, and the real-time rotational speed (N).

8.  A method of controlling acceleration of a gas turbine engine (20), the method comprising:

    outputting an amount of fuel from a fuel system (102);
    determining, by a controller (110), a real-time Wf/P3 ratio between a real-time fuel flow (Wf) of the fuel output from the fuel system (102) and a real-time pressure (P3) of a gas turbine engine (20);
    determining, by the controller (110), a real-time acceleration (N-dot) value of the gas turbine engine (20) based on a real-time rotational speed (N) of the gas turbine engine (20);
    generating, by the controller (110), a first fuel command signal that reduces a first error between the real-time Wf/P3 ratio and a Wf/P3 ratio reference value, and a second fuel command signal that reduces a second error between a real-time N-dot value and a N-dot reference value;
    generating, by the controller (110), a blended fuel delivery command signal (123) based on the first and second fuel command signals; and
    controlling the fuel system (102) to change the fuel flow using the blended fuel delivery command signal (123).

9.  The method of claim 8, further comprising averaging, by a fuel delivery logic system (120), the first and second fuel command signals to generate the blended fuel delivery command signal (123).

10. The method of claim 8 or 9, further comprising applying, by the fuel delivery logic system (120), a first weighted value to the first fuel command signal and applying a second weighted value to the second fuel command signal.

11. The method of claim 9 or 10, further comprising modifying, by the fuel delivery logic system (120), the blended fuel delivery signal (123) to limit the fuel delivery rate and the amount of the fuel output to the gas turbine engine (20).

12. The method of any of claims 8 to 11, further comprising rotating a gas turbine engine (20) at a rotational speed that can be varied in response to receiving the fuel output from the fuel system (102); and, optionally, further comprising controlling the fuel flow output from the fuel supply system (102) according to the blended fuel delivery command signal (123) so as to control the acceleration of the gas turbine engine (20).

13. The method of claim 12, further comprising:

    measuring, by a fuel flow sensor (130), the real-time fuel flow (Wf) of the fuel delivered to the gas turbine engine (20) and outputting a fuel flow signal from the fuel flow sensor (130) indicating the real-time fuel flow (Wf);
    measuring, by a pressure sensor (132), the real-time pressure (P3) of the gas turbine engine (20), and outputting a pressure signal from the pressure signal indicating the real time pressure (P3); and
    measuring, by a spool speed sensor (134), the real-time rotational speed (N) of the gas turbine engine (20), and outputting a speed signal from the spool speed sensor (134) indicating the real-time rotational speed (N); and, optionally,
    further comprising:

        delivering the fuel flow signal and the pressure signal to a ratio unit (114);
        outputting a Wf/P3 ratio signal indicating the real-time Wf/P3 ratio from the ratio unit (114);
        delivering the speed signal to a derivative unit (115); and outputting an acceleration signal indicating the real-time acceleration (N-dot) value from the derivative unit (115).

14. The method of any of claims 8 to 13, further comprising:

    outputting, from a first feedback controller (118), the first fuel command signal based on the Wf/P3 ratio signal and a Wf/P3 reference value; and
    outputting, from a second feedback controller (119), the second fuel command signal based on the acceleration signal and an acceleration reference value.

15. The method of any of claims 8 to 14, further comprising determining the Wf/P3 reference value and the acceleration reference value based on at least one of ambient gas turbine compressor entry temperature (T1), ambient outside air temperature (OAT), ambient altitude, ambient airspeed, and the real-time rotational speed (N).

FIG. 1

FIG. 2

Europäisches
Patentamt

European
Patent Office

Office européen
des brevets

# EUROPEAN SEARCH REPORT

**Application Number**

EP 24 21 1591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANG WEI ET AL: "Design of transient state control mode based on rotor acceleration", 2015 12TH INTERNATIONAL BHURBAN CONFERENCE ON APPLIED SCIENCES AND TECHNOLOGY (IBCAST), IEEE, 13 January 2015 (2015-01-13), pages 126-132, XP032745001, DOI: 10.1109/IBCAST.2015.7058492 [retrieved on 2015-03-11] | 1,3-8, 10-15 | INV. F02C9/28 |
| A | * page 126, paragraph 1 * <br> * page 129, paragraph 1 * <br> * figure 7 * <br> - - - - - | 2,9 | |
| A | US 4 117 668 A (ELSAESSER FRED L ET AL) 3 October 1978 (1978-10-03) <br> * figure 1 * <br> - - - - - | 1,8 | |
| A | US 2003/094000 A1 (ZAGRANSKI RAYMOND D [US] ET AL) 22 May 2003 (2003-05-22) <br> * figure 3 * <br> - - - - - | 1,8 | |

**TECHNICAL FIELDS SEARCHED (IPC)**

F02C

The present search report has been drawn up for all claims

| Place of search | Date of completion of the search | Examiner |
|---|---|---|
| The Hague | 20 March 2025 | Mihé, Julian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    EP 24 21 1591

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| US 4117668 | A | 03-10-1978 | BE | 848421 A | 16-03-1977 |
| | | | CA | 1072364 A | 26-02-1980 |
| | | | DE | 2652728 A1 | 26-05-1977 |
| | | | FR | 2332428 A1 | 17-06-1977 |
| | | | GB | 1508970 A | 26-04-1978 |
| | | | NL | 7612420 A | 23-05-1977 |
| | | | US | 4117668 A | 03-10-1978 |
| US 2003094000 | A1 | 22-05-2003 | EP | 1312780 A2 | 21-05-2003 |
| | | | JP | 2003148168 A | 21-05-2003 |
| | | | US | 2003094000 A1 | 22-05-2003 |
| | | | US | 2004093151 A1 | 13-05-2004 |

EPO FORM P0459

For more details about this annex : see Official Journal of the European Patent Office, No. 12/82